# EUROPEAN PATENT APPLICATION

(11) **EP 1 553 477 A1**
(43) Date of publication of application: **13.07.2005**
(21) Application number: 04250123.9
(22) Date of filing: 12.01.2004
(51) Int. Cl.: G06F 1/00, G05B 19/406

(54) **System integrity check for drives**

(71) Applicant: SIEMENS AKTIENGESELLSCHAFT, 80333 München (DE)
(72) Inventor: Donald, Ian, Marchamley SY4 5JU (GB); Kenney, Richard, Crewe CW1 5TY (GB)
(74) Representative: Humphrey-Evans, Edward John

(57) **Abstract**

The present invention relates to drives, and more especially, the present invention relates to a system integrity check for AC drives. Traditionally AC/DC drives systems have been maintained by competent staff with a good level of knowledge. Increasingly due to productivity savings, industry is using staff with lower skill levels to maintain equipment, which means the equipment has to be simpler to install and replace when a failure occurs. In addition the equipment normally needs to be replaced quickly to minimise factory downtime.

## Description

### FIELD OF THE INVENTION

The present invention relates to drives, and more especially, the present invention relates to a system integrity check for AC and DC drives.

### FIELD OF THE INVENTION

Traditionally industrial AC and DC drive systems for manufacturing processes and the like have been maintained by competent staff with a good level of system knowledge. It is now becoming increasingly common for industries to employ staff with lower skill levels to maintain equipment. This, in turn, has brought about a requirement for equipment to be simpler to install and replace when a failure occurs. In addition, it is normally expected, should equipment failure occur or there is a strong possibility of an item of equipment being required to be replaced for service or otherwise, that such equipment can be replaced quickly to minimise factory downtime.

One issue with respect to drives relates to the installation or replacement within a complex system, for example an automation system, is the risk of connecting up any cabling incorrectly between any one of a number of drives. It will be appreciated that, in an industrial situation, drives are often co-located and there is a high risk of control leads from control units or control units themselves (with an integral plug module) being incorrectly fitted to drives other than an intended drive; equipment could be damaged and processes be operated out of sequence, which might result in accidents and/or harm to personnel. In systems where safety is especially important, then in the process of connection of drives with associated interfaces and cables, it is vital to avoid such hazardous conditions. Where the control unit and power unit of a drive system can also be interchanged separately there are even greater risks of damage. This is especially true if the control unit is mounted remotely from the power module and controlled via a communications/field bus.

To give an example of this in practice, consider a conveyor belt system controlled by a motor and drive and a piece of machinery which performs an operation on an object travelling down the conveyer. This machine also has a motor and drive; both of the drives can be controlled remotely using a field communications bus and have position feedback determined by encoders (it should be noted that the fact that the drive itself consists of separate control unit and power modules). Now if the control modules are both simultaneously replaced or accidentally swapped during commissioning or the encoder cables are swapped then this could result in the conveyor not running or operating at an incorrect speed and the machine operating incorrectly, which could result in damage or injury.

Traditionally the problem has been solved by using mechanical coded connectors to avoid cables of two different control-unit drive combinations to be interchanged. The use of different shaped connectors has also been used but this makes manufacture more difficult in that there is a reduced commonality of component.

### OBJECT TO THE INVENTION

The present invention seeks to provide an improved method of encoding cables and harnesses in an automated assembly line. The present invention also seeks to provide an improved system and method of replacing faulty wiring, drives or modules in the field.

### SUMMARY OF THE INVENTION

In accordance with a first aspect of the present invention, there is provided a drive connection system, comprising a drive and a control unit, wherein the drive and control unit have separately coded identifiers which are written into a memory location associated with each unit, where identifiers can be read by a respective other corresponding unit whereby to enable compatibility checks upon start-up. Conveniently the compatibility checks are enabled with reference to a look-up table stored in the memory location.

This can assist in the prevention of any incorrect connection of control units with drives when a number of drives are co-located. Conveniently the control unit is attached to the drive by way of a cable: the plug and socket modules may be at one end of the cable; the plug and socket may be connected to one of the control unit and drive.

Conveniently, the memory is an Electronically Erasable Programmable ROM (EEPROM). Conveniently, the memory location can be arranged to assist in the determination of any faults as they occur following successful connection of a control unit with a drive. Other types of memory could be used. In a preferred embodiment, the EEPROMs communicate over a serial bus communication link, such as 12MBit, conveniently via ASICs associated with the EEPROMs.

In another embodiment, the control unit includes a Multi Media Card (MMC) which is operable to store all the parameters of a control unit and the corresponding parameters of a drive module and its unique coded identifier, whereby a control module can be simply exchanged with another without the need for explicit parameterization, the MMC being operable to be exchanged between first and second control units.

Preferably, the ID-MATE data in the memory of either the power stack or the control unit can be cleared whereby a module can be re-used, such that when subsequently used the cleared unit can be powered up and will appear as a new unit and can be fitted into an existing system.

In accordance with another aspect of the invention, there is provided a method of performing a drive system integrity check, the drive system comprising a control unit and a drive, wherein the control unit includes a connector plug (module) which mates with a socket (module) associated with the drive, the control unit plug having connector terminals arranged to electrically connect the corresponding terminals in the socket, the system having associated with each module a memory for both control units and drive wherein a unique coded identifier, ID, is written into a first memory location and wherein a second memory location is reserved for the identification of respective corresponding mating unit, ID-MATE; the method comprising the steps of connecting corresponding connector terminals whereby to electrically connect a control unit to a drive; upon initial connection, instigate a process to determine . whether or not the control unit module is attached to its corresponding drive module, whereby upon power-up, the control unit should check the ID and 10-MATE values stored in its own memory and also those stored in the drive memory and, dependent upon the response and take action, if appropriate, with reference to a look-up table stored within the corresponding memories.

The invention can also be employed in the event of a failure wherein there is a method of performing a drive system integrity check post installation, wherein upon the occurrence of a fault, the control unit CU to checks the ID and ID-MATE values stored in its own memory and also those stored in the drive memory and, dependent upon the response, take action from a look-up table stored within the corresponding memories.

The present invention can thus provide a simple solution to the problem of checking the connection of control-unit drive interfaces and enable a fault associated with a system in operation to be more easily identified.

### BRIEF DESCRIPTION OF THE FIGURES

The invention may be understood more readily, and various other aspects and features of the invention may become apparent from consideration of the following description and the figures as shown in the accompanying drawing sheets, wherein:

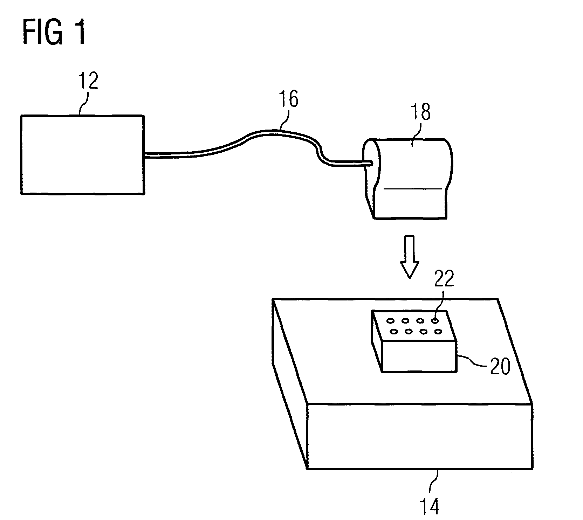

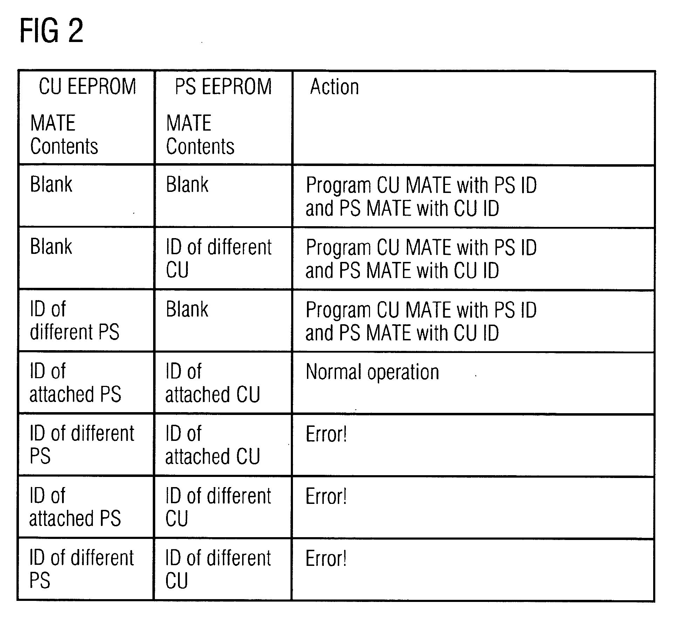

Figure 1 shows a first embodiment of a connector assembly made in accordance with the invention; and,
Table 1 shows one form of a look-up table operable in an embodiment of the present invention.

### DETAILED DESCRIPTION OF THE INVENTION

There will now be description, by way of example, the best mode contemplated by the inventors for carrying out the invention. In the following description, numerous specific details are set out in order to provide a complete understanding of the present invention. It will be apparent however, to those skilled in the art, that the present invention may be put in to practice with variations of the specific.

Referring now to Figure 1, there is shown a control unit 12 which is connectable to drive (power stack) 14 via a cable 16. Cable 16 is connected to a control unit at a first end and, at a second end, terminates in a connector plug (module) 18 which mates with a socket (module) 20, which has connector terminals 20 arranged to electrically connect with corresponding terminals in module 18. Associated with each module there is an EEPROM and a unique coded identifier, ID, for both power stacks and control units this is written into an EEPROM location of both types of module during production. A second EEPROM location in both modules is reserved for the identification of a mating unit, ID-MATE, which is typically programmed during commissioning in the field. The present invention provides these corresponding modules with various auto-detect functions within the drive whereby to validate correct connection of its interfaces. In the event of invalid connection or failure of a connection, for example arising through failure of a drive, a safe shut down of the drive can be achieved with the automatic raising of an operator alarm. This can be achieved by implementing the following combination of functions to fully check all interfaces.

Accordingly, upon initial connection a process is started to determine whether or not a control module is attached to its corresponding power module. When the unit is powered up, the control unit CU should check the ID and ID-MATE values stored in its own EEPROM and also those stored in the power stack EEPROM and take instruction from a look-up table stored within the corresponding EEPROMs and as shown in Table 1.

Using this table, any new power stack or control unit can be built into an existing system. Those skilled in the art will be familiar with the operation with respect to the re-programming of an EEPROM: in the event that any unit that has previously been operated with another previously used unit, then the system will refuse to allow them to work together.

In the event that the user wishes to re-use a module then it should be possible to clear the ID-MATE of either the power stack or the control unit through any normal method of communication (BOP, RS485, PROFIBUS™ etc). The first time that the cleared unit is powered up it will then appear to be a new unit and can be fitted into an existing system.

To further improve the mutual compatibility of control and power modules, a Multi Media Card (MMC) can be used by a control unit to store all its parameters including the Power Module Unique Identification Code. This has the advantage that the control module can be simply exchanged with another without the need for explicit parameterization, by transferring the MMC of the replaced control unit to the replacement control unit. To make it possible to use new control units in this scheme, a control unit having an ID-MATE without data at power up could check whether an MMC card is fitted and, if so, write its own ID to the card, thus locking the card to the control unit.

To verify that an encoder has been connected correctly to the control unit the drive will run the motor at a low speed and check for encoder pulses - if no encoder pulses are received then the system should give a warning/fault and not allow the speed to increase. Equally, if the encoder pulse train is incorrect, then a warning would be raised and a check on the encoder and/or wiring would be performed during initial commissioning.

In the event that the drive motor has EM brake connections, then a parameterization check for this feature can also be performed. In such a case, the test is begun with the motor in a stationary condition. The EM brake is then removed and the motor is run to a particular speed. This verification is performed by operating the motor at an appropriate speed by either determining encoder position by means of feedback or by observing the motor directly. The brake should then be applied and the drive should check it stops within a predetermined time period when compared to an un-braked motor.

An alternative solution to the above would be to assign unique identifiers to all interface units e.g. EM Brake, Encoder and Power Module. This would require that a one wire device such as the Dallas DS2430A Factory-Serialised Siiicon Labei is built into each unit, which would also require separate unique identifiers. This means that special encoders/EM brakes would need to be produced. In order for the control module to be able to read the unique identifier, then an additional separate interface wire would also be .required within each cable between EM Brake, Encoder and Control Unit.

The first embodiment described above shows a connecting lead between the control unit and drive. It will be appreciated that, in some systems, the control unit may comprise a plug which is inserted directly into an associated socket of the drive. Equally, the plug and sockets may both be separate from the control unit and drive, or there being only one lead from the drive to a socket.

One advantage provided by the present invention is that no specially coded connectors or cable harnesses are required - this can save costs arising from both the coding and the act of attaching the codes - or any special printing mechanism employed to otherwise code the connectors/harnesses. The benefit of this in practice is that, in the event of a failure in any one or more interface cables, no specially coded cables would have to be produced to ensure that it is noted at a later date that there has been a failure and that this should be taken into consideration. Furthermore, the present invention enables the use of standard, commercially available, encoders, rather than units with additional tell-back signals. The present invention further enables a quick replacement and system integrity check - this has obvious implications in minimising plant down time due to quick parameterisation and cabling checks. Importantly, systems and units cabled in accordance wit the present invention can be replaced by less skilled personnel.

## Claims

1. A drive system having an integrity check mechanism, the system comprising a control unit (12) and a drive (14), wherein the control unit is connected to the drive by means of a connector plug (module) (18) which mates with a socket (module) (20), having corresponding connector terminals (22) arranged to electrically connect the control unit with the drive, **characterised in that** associated with each module there is a memory for both control units and drive wherein a unique coded identifier, ID, is written into a first memory location and wherein a second memory location is reserved for the identification of respective corresponding mating unit, ID-MATE.

2. A drive system according to claim 1, wherein the memory of each module (18, 20) comprises an EEPROM.

3. A drive system according to claim 1 or 2, wherein the control unit includes a Multi Media Card (MMC) which is operable to store all the parameters of a control unit and the corresponding parameters of a drive module unique coded identifier, whereby a control module can be simply exchanged with another without the need for explicit parameterization, the MMC being operable to be exchanged between first and second control units.

4. A drive system according to any one of claims 1 to 3 wherein a connector cable is provided to enable the control unit to be attached to the drive unit, the plug and socket being attached at one end or between the ends of the cable.

5. A drive system according to any one of claims 1 to 4 wherein the ID-MATE data in the memory of either the power stack or the control unit can be cleared whereby a module can be re-used, such that when subsequently used the cleared unit can be powered up and will appear as a new unit and can be fitted into an existing system.

6. A method of performing a drive system integrity check, the drive system comprising a control unit (12), a drive (14), wherein the control unit includes a connector plug (module) (18) which mates with a socket (module) (20) associated with the drive, the control plug having connector terminals (22) arranged to electrically connect with corresponding terminals in module (18), the system having associated with each module a memory for both control units and drive wherein a unique coded identifier, ID, is written into a first memory location and wherein a second memory location is reserved for the identification of respective corresponding mating unit, ID-MATE; the method comprising the steps of connecting corresponding connector terminals whereby to electrically connect a control unit to a drive; upon initial connection, determining whether or not the control unit module is attached to its corresponding drive module, whereby upon power-up, the control unit (12) should check the ID and ID-MATE values stored in its own memory and also those stored in the drive memory and, dependent upon the response and take action, if appropriate, from a look-up table stored within the corresponding memories.

7. A method according to claim 6, wherein to verify that an encoder has been connected correctly to the control unit, the drive will run the motor at a low speed and check for encoder pulses and:
in the event that no encoder pulses are received then the system should give a warning/fault and not allow the speed to increase; or,
in the event that the encoder pulse train is incorrect, then a warning would be raised whereby to enable a check on the encoder and/or wiring to be performed during initial commissioning.

8. A method according to claim 6 or 7, wherein for a drive system having a motor with EM brake connections, then a subsequent parameterization check is performed, the method further comprising the steps of:
removing the EM brake with the motor in a stationary condition;
running the motor at a particular speed;
verifying the speed by either determining encoder position by means of feedback or by observing the motor directly;
applying the brake of the motor; and.
determining that the drive stops within a predetermined time period when compared to an un-braked motor.

9. A method of performing a drive system integrity check post installation, the drive system comprising a control unit (12), and a drive (14); wherein a connector plug (module) (18) is in mating contact with a socket (module) (20), which have connector terminals (22) arranged to electrically connect the control unit with the drive, the system having associated with each module a memory for both control units and drive wherein a unique coded identifier, ID, is written into a first memory location and wherein a second memory location is reserved for the identification of respective corresponding mating unit, ID-MATE; the method comprising the steps of, upon the occurrence of a fault, causing the control unit (12) to check the ID and ID-MATE values stored in its own memory and also those stored in the drive memory and, dependent upon the response, take action from a look-up table stored within the corresponding memories.

10. A method of deleting data in a memory of a module of a drive system; the drive system comprising a control unit (12), and a drive (14), wherein a connector plug (module) (18) is in mating contact with a socket (module) (20), which have connector terminals (22) arranged to electrically connect the control unit with the drive, the system having associated with each module a memory for both control units and drive wherein a unique coded identifier, ID, is written into a first memory location and wherein a second memory location in both modules is reserved for the identification of respective corresponding mating unit, ID-MATE; the method comprising the steps of: clearing the ID-MATE of either the power stack or the control unit through any normal method of communication (BOP, RS485, PROFIBUS™ etc), whereby a module can be re-used.
